# EUROPEAN PATENT SPECIFICATION

(11) **EP 1 107 408 B1**
(45) Date of publication and mention of the grant of the patent: **22.07.2009**
(21) Application number: 00120569.9
(22) Date of filing: 20.09.2000
(51) Int. Cl.: H02B 13/035

(54) **Gas-insulated switchgear**
Gasisolierte Schaltanlage
Installation de commutation à isolation gazeuse

(30) Priority: 07.12.1999 JP 34699899
(43) Date of publication of application: 13.06.2001
(73) Proprietor: Kabushiki Kaisha Meidensha, Shinagawa-ku, Tokyo 141-0032 (JP)
(72) Inventor: Satou, Satoshi c/o Kabushiki Kaisha Meidensha, Tokyo 141-0032 (JP); Tsuji, Kenji c/o Kabushiki Kaisha Meidensha, Tokyo 141-0032 (JP); Hirose, Masayuki c/o Kabushiki Kaisha Meidensha, Tokyo 141-0032 (JP)
(74) Representative: Manitz, Finsterwald & Partner GbR

(56) References cited:
- WO-A-96/21936
- DE-A- 4 103 101
- DE-A- 4 312 620

## Description

The present invention relates to a gas-insulated switchgear system and a method of installing the gas-insulated switchgear system in which internal switching units disposed within a gas-filled tank are connected to respective bus bars at an external space to the gas-filled tank.

In a previously proposed gas-insulated switchgear a plurality of switching units such as vacuum interrupters (in the previously proposed gas insulated switchgear, three such switching units) are housed in a tank in which an insulating gas is filled.

In detail, the tank is extended vertically from a base. The gas-filled tank is partitioned into an upper chamber and a lower chamber by means of a partition plate. The lower chamber is provided with three-phase vacuum interrupters, current transformers (so-called, CT), and cable sockets, these being interconnected via conductors. Each cable socket is penetrated through a bottom surface of the tank. Each cable socket is connected to a cable. A three-phase insulating spacer is attached onto the partition plate with the conductors hermetically sealed thereby. The three-phase interior conductors are molded by means of the spacer. Three-phase conductors are connected via the interior conductors to the vacuum interrupters.

On the other hand, three-phase bus bars are extended vertically with respect to the extended directions of the interior conductors via porcelain clad in the upper chamber. The three-phase bus bars are used to connect another adjacent gas-insulated switchgear constituting a switchboard. On a part of each bus bar which is penetrated through the tank, a hermetical sealing ability and insulation between the bus bar and the tank are maintained. Three-phase grounding breaker equipped disconnecting switches are housed in the upper chamber to perform three-mode operations, viz., open, close, and ground and are intervened between respective bus bars and interior conductors.

An operational board to operate the vacuum interrupters is attached on a front lower surface of the tank and another operational board to operate the disconnecting switches is attached on the front upper surface of the tank.

At this stage, reference should also be made to DE-A-4103101 which shows and describes a similar gas insulated switch gear having upper and lower chambers filled with an insulation gas and separated by a partition plate. Mechanical separating switches connected to bus bars are provided in the upper chamber (or in the lower chamber in an alternative embodiment).

A further gas insulated switchgear system is shown and described in DE-A-4312620 which only has a single tank filled with insulating gas. Again, the bus bars are connected to the switching units within the tank.

In the previously proposed gas insulated switchgear, since each bus bar is penetrated through the tank, it is necessary to drain once the insulating gas from the tank to connect each bus bar to the disconnecting switch and, thereafter, the insulating gas has to be filled in the tank again when a plurality of the previously proposed gas-insulated switchgears are assembled in an array switchboard form at a power system site. This operation requires a lot of labors and considerable time. It is, therefore, an object of the present invention to provide a gas-insulated switchgear and an assembly method of the gas-insulated switchgear which can easily be assembled in the array switchboard form in a short period of time.

According to one aspect of the present invention, there is provided a gas-insulated switchgear system, comprising: at least one switching unit; a tank in which an insulating gas is filled and the at least one switching unit is housed, at least one conductor path extended externally to the tank and to which the at least one switching unit is connected, wherein the gas-insulated switchgear system further comprises an interior conductor which is connected to the at least one switching unit and is led externally from the tank to be connected to the conductor path and an insulating member to hermetically seal the interior conductor extended from the tank, wherein the interior conductor comprises three-phase interior conductors vertically extended within the tank, wherein the insulating member comprises a three-phase spacer which is disposed on an upper wall of the tank and which is molded to the respective interior conductors and wherein the conductor path extended externally to the tank comprises three-phase bus bars extended in the longitudinal direction of an array direction of the associated gas-insulated switching unit.

According to another aspect of the present invention, there is provided a method of installing a gas-insulated switchgear system comprising: providing at least one switching unit, providing a tank in which an insulating gas is filled and in which the at least one switching unit is housed and providing at least one conductor path extended externally to the tank and to which the at least one switching unit is connected, wherein the assembly method further comprises: providing an interior conductor connected to the at least one switching unit, leading the interior conductor externally from the tank, connecting the interior conductor to the conductor path externally of the tank and providing an insulating member to hermetically seal the interior conductor extended externally from the tank.

The invention will now be described in more detail by way of example and with reference to embodiments and to the accompanying drawings in which:
Fig. 1 is a configuration view of a gas-insulated switchgear in a first preferred embodiment according to the present invention,
Figs. 2A, 2B, 2C, and 2D are a top view, an elevational view, a left side view, and a detailed partial elevational view of a bus bar connecting portion enclosed by a circle A in Fig. 23, respectively, in a case where each of the same gas-insulated switchgears shown in Fig. 1 is configured in an array board form.
Figs. 3A and 3B are detailed view of a cable 5 connecting portion of the gas-insulated switchgear in the first embodiment shown in Fig. 1 and
Fig. 4 is a configuration view of the gas-insulated switchgear in a second preferred embodiment according to the present invention.

Reference will hereinafter be made to the drawings in order to facilitate a better understanding of the present invention.

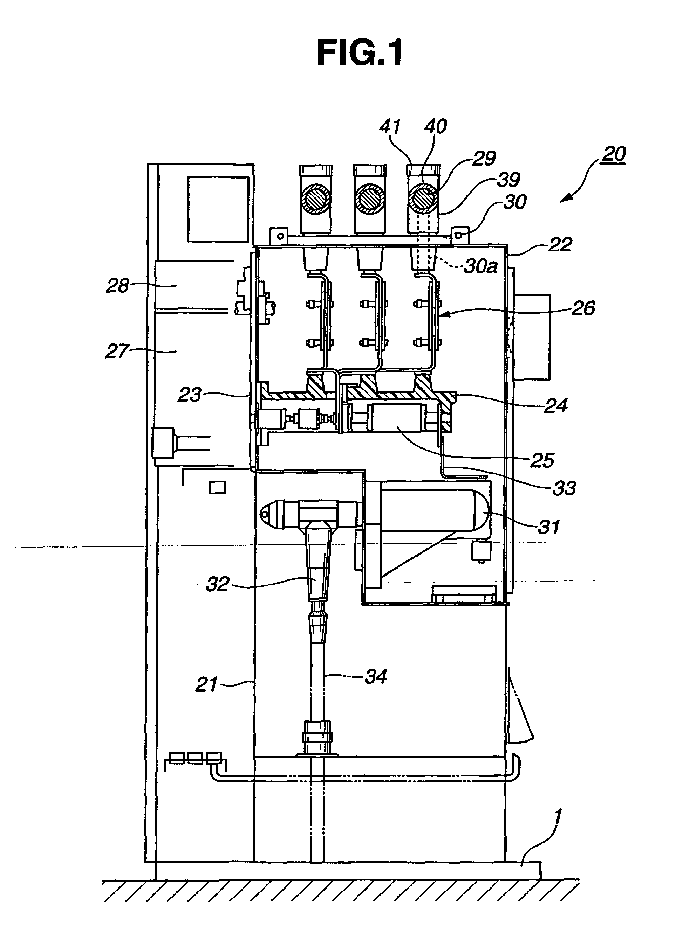

Figs. 1, 2A through 2D, 3A, and 3B show a first embodiment of a gas insulated switchgear in a first preferred embodiment according to the present invention.

As shown in Fig. 1, a metallic tank 22 is extended 20 on a base 1 via a frame bed 21. The frame bed 21 is made of a thin metallic plate. A lower part of a front surface of the tank 22 is cut out.

An opening is formed on a front surface of the tank 22 and is enclosed by means of an attachment plate 23. An inner part of the tank 22 is hermetically sealed. The insulating gas is filled in the tank 22. One side of an insulating frame 24 made of a solid-state insulating material is attached onto the attachment plate 23. The insulating frame 24 is located in an inner space of the tank 22 together with a plurality of switching units 25 in the form of vacuum interrupters. In addition, three-phase grounding switching unit equipped disconnecting switches 26 are extended on the insulating frame 24 as the switching units. Then, an operational board 27 to operate the vacuum interrupters 25 is attached onto an outside of the attachment plate 23 and an operational board 28 to operate the grounding switching unit equipped disconnecting switches 26 is attached onto the outside thereof.

Each bus bar 29 is extended on an upper part of the tank 22 without penetration thereof through the tank 22. A three-phase insulating spacer 30 is disposed as an insulating member to hermetically seal an opening provided on the upper part of the tank 22. The three-phase insulating spacer 30 molds the three-phase interior conductors 30a with a solid-state insulating material.

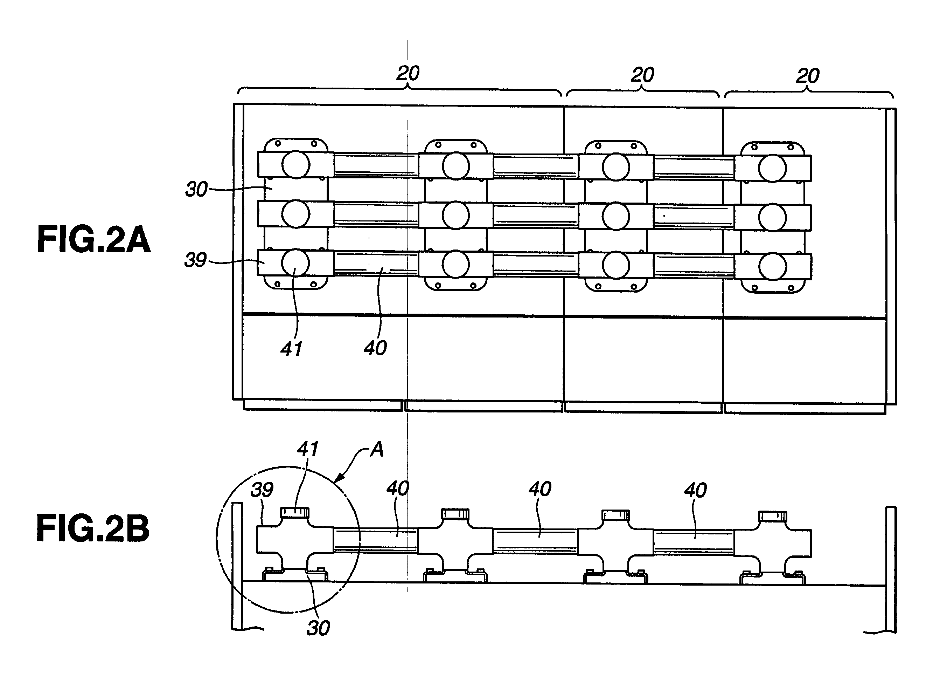

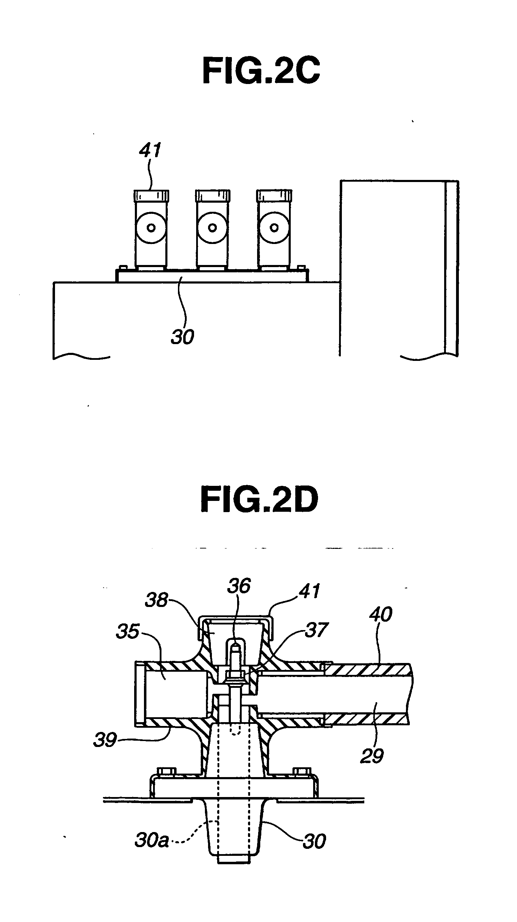

An upper end of the respective interior conductors 30a is connected to each corresponding bus bar 29 and a lower end thereof is connected to each corresponding grounding switching unit equipped disconnecting switch 26. Figs. 2A through 2D show a connective relationship of each interior conductor 30a to each corresponding bus bar 29 when the plurality of the gas-insulated switchgear 20 are assembled in an array switchboard form.

As typically shown in Fig. 2D, with a dummy end flag 35 and an end of each bus bar 29 mounted on an upper part of each interior conductor 30a, these three members are interlinked via a bolt 36 and a nut 37. A plug 38 encloses the inter-linked portion. An electrically conductive rubber 39 encloses the whole outer surface of the plug 38 and three-phase insulating spacer 30. A Metallikon (or spraying process) layer 40 is formed on each bus bar 29 and a ground layer (not shown) is formed on its outer peripheral surface by means of a painting, it is noted that, in Fig. 2D, 41 denotes a cap.

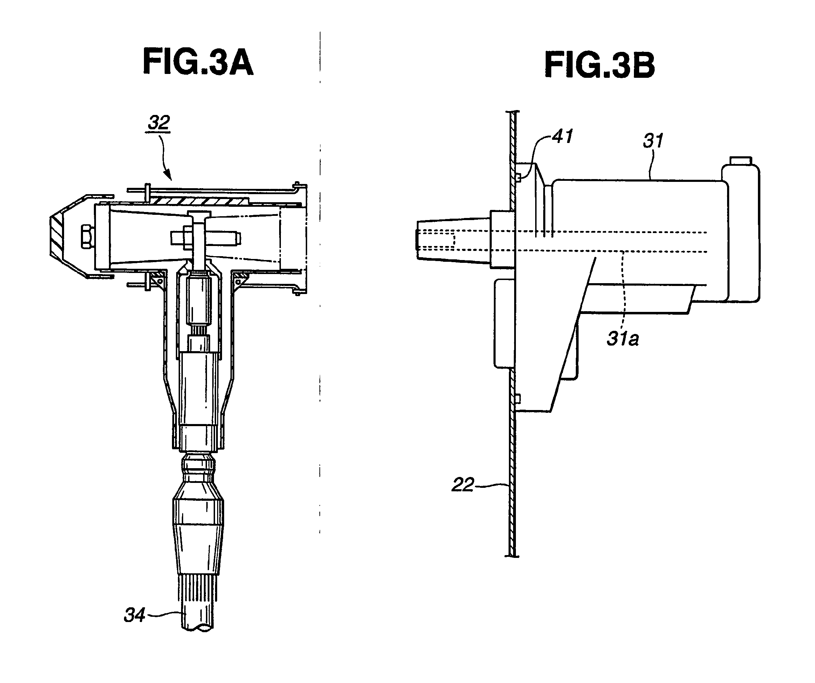

Figs. 3A and 3B show a cable head structure and a bushing CT profile in the gas-insulated switchgear in the first embodiment.

As shown in Figs. 3A and 3B, each composite bushing 31 into which a current transformer (CT - not shown) and an interior conductor 31 a are buried is disposed for a corresponding phase of three-phase power lines. Each composite bushing 31 is generally of a bushing as a solid-state insulating material. Each bushing 31 is hermetically sealed from an inner side on an opening formed on the tank 22 via an O-ring 41.

The cable head 32 shown in Fig. 7A is attached to the bushing 31 shown in Fig. 3B at the front surface of the gas-insulated switchgear in the first embodiment. A cable terminal material of DIN standard is used as the cable head 32 and a grounding layer is formed on its surface of the cable head 32. A conductor 33 serves to connect each vacuum interrupter 25 with the interior conductor 31a of each bushing 31. A cable 34 is connected to the corresponding cable head 32.

Next, an assembly operation of the gas-insulated switchgear in the first embodiment will be described below.

When the gas-insulated switchgear is assembled, the insulating frame 24, each of the vacuum interrupters 25, each of grounding switching unit equipped disconnecting switches 26, and the operational boards 27 and 28 are attached onto the attachment plate 23 and, thereafter, the attachment plate 23 is attached onto the tank 22. Then, with the respective bushings 31 attached onto inner parts of respective tanks 22, the respective vacuum interrupters 25 are connected to the respectively corresponding bushings CT 31 via respective conductors 33.

Next, with the three-phase insulating spacer 30 attached onto the upper part of the tank 22, the grounding switching unit equipped disconnecting switches 26 are connected to the respective interior conductors 30a. Next, each cable head 32 is attached onto the corresponding bushing 31. Finally, the insulating gas is filled within the upper part of the tank 22.

On the other hand, in a case where the gas-insulated switchgear is installed in the array switchboard form at a power system's site, the bus bars 29 are disposed on an upper part of the tank 22 without drawing out the insulating gas filled in the tank 22 and are connected to the respective interior conductors 30a. Since the connections of the interior conductors 30a to the bus bars 29 are carried out at an external of the tank 22, it is not necessary to draw out or fill the insulating gas from or in the inner space of the tank 22.

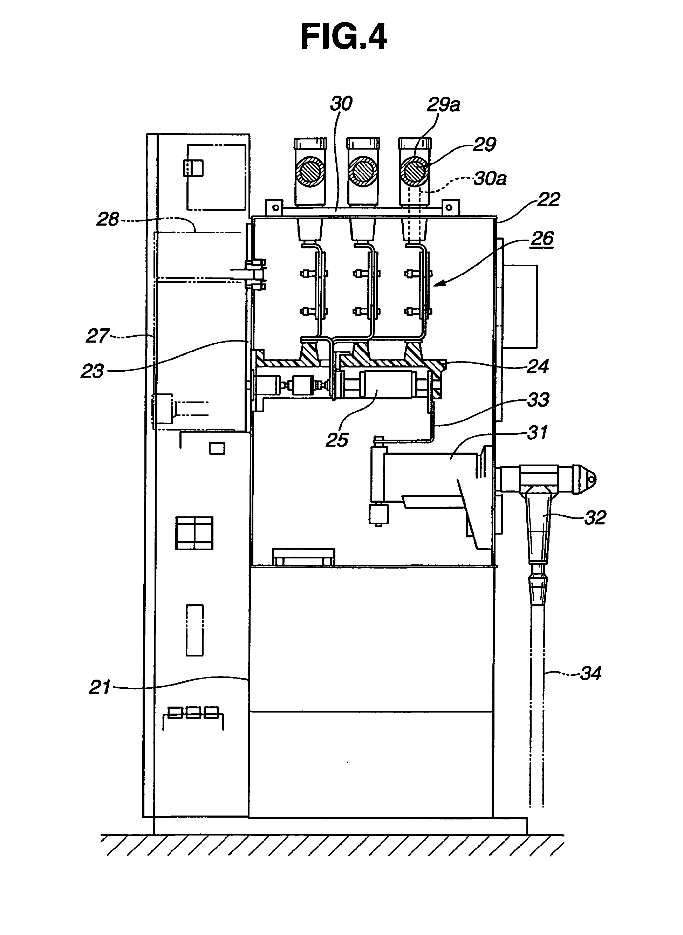

Fig. 4 shows a second preferred embodiment of the gas-insulated switchgear according to the present invention.

As compared with the first embodiment typically shown in Fig. 1, the lower part of the front surface within the tank 22 is not cut out but is attached onto the rear surface of the tank 22 as shown in Fig. 4. In addition, each cable head 32 is attached onto the corresponding bushing CT 31 through the rear surface of the tank 22.

Since the operation and the other structure are the same as those described in the first embodiment, the detailed explanations thereof are omitted herein.

## Claims

1. A gas-insulated switchgear system, comprising:
at least one switching unit (25, 26),
a tank (22) in which an insulating gas is filled and the at least one switching unit (25, 26) is housed, and
at least one conductor path (40) extended externally to the tank and to which the at least one switching unit (25, 26) is connected, wherein the gas-insulated switchgear system further comprises an interior conductor (30a) which is connected to the at least one switching unit (25, 26) and is led externally from the tank to be connected to the conductor path (40) and an insulating member (30) to hermetically seal the interior conductor (30a) extended from the tank, wherein the interior conductor (30a) comprises three-phase interior conductors (30a) vertically extended within the tank, wherein the insulating member (30) comprises a three-phase spacer which is disposed on an upper wall of the tank (22) and which is molded to the respective interior conductors (30a) and wherein the conductor path (40) extended externally to the tank comprises three-phase bus bars (29) extended in the longitudinal direction of an array direction of the associated gas-insulated switching unit (25, 26).

2. A gas-insulated switchgear system as claimed in claim 1, wherein the gas-insulated switchgear further comprises another interior conductor (33) connected to a switching unit (25) and which is led externally from the tank to be connected to a second external conductor path (34) and another insulating member (31) in which a current transformer is buried to hermetically seal the other interior conductor (33) extended from the tank (22).

3. A gas-insulated switchgear system as claimed in claim 1, wherein the at least one switching unit is a vacuum interrupter (25).

4. A gas-insulated switchgear system as claimed in claim 2, wherein the second external conductor path (34) is formed by a cable.

5. A gas-insulated switchgear system as claimed in claim 2, wherein the other insulating member (31) is disposed on a rear wall of the tank (22) with respect to a switchboard (27) of the tank (22).

6. A method of installing a gas-insulated switchgear system comprising:
providing at least one switching unit (25, 26),
providing a tank (22) in which an insulating gas is filled and in which the at least one switching unit (25, 26) is housed and
providing at least one conductor path (40) extended externally to the tank (22) and to which the at least one switching unit (25,26) is connected and
wherein the assembly method further comprises: providing an interior conductor (30a) connected to the at least one switching unit (25, 26), leading the interior conductor (30a) externally from the tank (22), connecting the interior conductor (30a) to the conductor path externally of the tank (22) and providing an insulating member (30) to hermetically seal the interior conductor extended externally from the tank (22).

## Patentansprüche

1. Gasisoliertes Schaltanlagensystem, das umfasst:
mindestens eine Schalteinheit (25, 26),
einen Tank (22), in den ein Isoliergas eingefüllt ist und in dem die mindestens eine Schalteinheit (25, 26) untergebracht ist, und
mindestens einen Leiterpfad (40), der extern an den Tank verlängert ist und mit dem die mindestens eine Schalteinheit (25, 26) verbunden ist, wobei das gasisolierte Schaltanlagensystem ferner einen Innenleiter (30a), der mit der mindestens einen Schalteinheit (25, 26) verbunden ist und zur Verbindung mit dem Leiterpfad (40) nach außerhalb des Tanks geführt ist, und ein Isolierelement (30) umfasst, um den Innenleiter (30a) hermetisch abzudichten, der von dem Tank weg verlängert ist, wobei der Innenleiter (30a) dreiphasige Innenleiter (30a) umfasst, die vertikal innerhalb des Tanks verlängert sind, wobei das Isolierelement (30) einen dreiphasigen Abstandshalter umfasst, der an einer oberen Wand des Tanks (22) angeordnet ist und der mit den jeweiligen Innenleitern (30a) vergossen ist, und wobei der extern an den Tank verlängerte Leiterpfad (40) dreiphasige Sammelschienen (29) umfasst, die in der Längsrichtung einer Matrixrichtung der zugeordneten gasisolierten Schalteinheit (25, 26) verlängert sind.

2. Gasisoliertes Schaltanlagensystem nach Anspruch 1,
wobei die gasisolierte Schaltanlage ferner einen weiteren Innenleiter (33), der mit einer Schalteinheit (25) verbunden ist und der zur Verbindung mit einem zweiten externen Leiterpfad (34) nach außerhalb des Tanks geführt ist, und ein weiteres Isolierelement (31) umfasst, in welches ein Stromumformer eingelassen ist, um den weiteren Innenleiter (33), der von dem Tank (22) weg verlängert ist, hermetisch abzudichten.

3. Gasisoliertes Schaltanlagensystem nach Anspruch 1, wobei die mindestens eine Schalteinheit ein Vakuumunterbrecher (25) ist.

4. Gasisoliertes Schaltanlagensystem nach Anspruch 2,
wobei der zweite externe Leiterpfad (34) durch ein Kabel gebildet ist.

5. Gasisoliertes Schaltanlagensystem nach Anspruch 2,
wobei das weitere Isolierelement (31) an einer Rückwand des Tanks (22) bezüglich einer Schalttafel (27) des Tanks (22) angeordnet ist.

6. Verfahren zum Installieren eines gasisolierten Schaltanlagensystems, das umfasst, dass:
mindestens eine Schalteinheit (25, 26) bereitgestellt wird,
ein Tank (22) bereitgestellt wird, in welchen ein Isoliergas eingefüllt wird und in welchem die mindestens eine Schalteinheit (25, 26) untergebracht wird, und
mindestens ein Leiterpfad (40) bereitgestellt wird, der extern an den Tank (22) verlängert ist und mit welchem die mindestens eine Schalteinheit (25, 26) verbunden wird, und
wobei das Zusammenbauverfahren ferner umfasst, dass: ein Innenleiter (30a), der mit der mindestens einen Schalteinheit (25, 26) verbunden ist, bereitgestellt wird, der Innenleiter (30a) nach außerhalb des Tanks (22) geführt wird, der Innenleiter (30a) mit dem Leiterpfad außerhalb des Tanks (22) verbunden wird und ein Isolierelement (30) bereitgestellt wird, um den nach außerhalb des Tanks (22) verlängerten Innenleiter hermetisch abzudichten.

## Revendications

1. Système de commutation à isolation gazeuse, comprenant :
au moins une unité de commutation (25, 26),
une enceinte (22) dans laquelle un gaz isolant est rempli et ladite au moins une unité de commutation (25, 26) est logée, et
au moins un trajet conducteur (40) qui s'étend par voie externe vers l'enceinte et auquel ladite au moins une unité de commutation (25, 26) est connecté, dans lequel le système de commutation à isolation gazeuse comprend encore un conducteur intérieur (30a) qui est connecté à ladite au moins une unité de commutation (25, 26) et qui est menée par voie externe depuis l'enceinte a connecté vers le trajet conducteur (40) est un élément isolant (30) pour sceller hermétiquement le conducteur intérieur (30a) qui s'étend depuis l'enceinte, dans lequel le conducteur intérieur (30a) comprend des conducteurs intérieurs triphasés (30a) qui s'étendent verticalement à l'intérieur de l'enceinte, l'élément isolant (30) comprenant un élément d'espacement à trois phases qui est disposé sur une paroi supérieure de l'enceinte (22) et qui est moulé sur les conducteurs intérieurs respectifs (30a), et dans lequel le trajet conducteur (40) qui s'étend par voie externe jusqu'à l'enceinte comprend des barres omnibus triphasées (29) qui s'étend dans la direction longitudinale d'une direction d'arrangement de l'unité de commutation à isolation gazeuse associée (25,26).

2. Système de commutation à isolation gazeuse selon la revendication 1, dans lequel le système de commutation à isolation gazeuse comprend encore un autre conducteur intérieur (33) connecté à une unité de commutation (25) et qui est menée par voie externe de puis l'enceinte à connecter jusqu'à un second trajet conducteur externe (34), et un autre élément isolant (31) dans lequel est noyé un transformateur de courant pour sceller hermétiquement l'autre conducteur intérieur (33) qui s'étend depuis l'enceinte (22).

3. Système de commutation à isolation gazeuse selon la revendication 1, dans lequel ladite au moins une unité de commutation est un interrupteur à vide (25).

4. Système de commutation à isolation gazeuse selon la revendication 2, dans lequel le second trajet conducteur externe (34) est formé par un câble.

5. Système de commutation à isolation gazeuse selon la revendication 2, dans lequel l'autre élément isolant (31) est disposé sur une paroi postérieure de l'enceinte (22) par rapport à un panneau de commutation (27) de l'enceinte (22).

6. Procédé pour installer un système de commutation à isolation gazeuse, comprenant les étapes consistant à :
fournir au moins une unité de commutation (25, 26),
fournir une enceinte (22) dans laquelle un gaz isolant est rempli et dans laquelle ladite au moins une unité de commutation (25, 26) est logée, et
fournir au moins un trajet conducteur (40) qui s'étend par voie externe jusqu'à l'enceinte (22) et auquel ladite au moins une unité de commutation (25, 26) est connectée, et
dans lequel le procédé d'assemblage comprend encore : de fournir un conducteur intérieur (30a) connecté à ladite au moins une unité de commutation (25, 26), de mener le conducteur intérieur (30a) à l'extérieur de puis l'enceinte (22), en connectant le conducteur intérieur (30a) au trajet conducteur à l'extérieur de l'enceinte (22), et de fournir un élément isolant (30) pour sceller hermétiquement le conducteur intérieur qui s'étend vers l'extérieur de l'enceinte (22).
